(19) Europäisches Patentamt
European Patent Office
Office européen des brevets

(11) **EP 1 479 736 B1**

(12) **EUROPEAN PATENT SPECIFICATION**

(45) Date of publication and mention
of the grant of the patent:
**18.04.2012 Bulletin 2012/16**

(51) Int Cl.:
*B05D 7/16* (2006.01)  *C09D 5/08* (2006.01)

(21) Application number: **04011507.3**

(22) Date of filing: **14.05.2004**

(54) **Corrosion inhibitive coatings**

Korrosionsverhindernde Ueberzugsmittel

Compositions de revêtement inhibitrices de corrosion

(84) Designated Contracting States:
**AT BE BG CH CY CZ DE DK EE ES FI FR GB GR HU IE IT LI LU MC NL PL PT RO SE SI SK TR**

(30) Priority: **21.05.2003 GB 0311639**

(43) Date of publication of application:
**24.11.2004 Bulletin 2004/48**

(73) Proprietor: **Tata Steel UK Limited**
**London**
**SW19 4WY (GB)**

(72) Inventors:
• **Bohm, Sivasambu, Dr.**
**Sheffield**
**South Yorkshire, S35 2YF (GB)**
• **Longdon, Peter John, Dr.**
**Rotherham,**
**South Yorkshire, S66 8QP (GB)**
• **English, Timothy Harold, Dr.**
**Sheffield,**
**South Yorkshire, S11 7JQ (GB)**
• **Bohm, Hennegama Liyanage Mallika, Dr.**
**Sheffield,**
**South Yorkshire S35 2YF (GB)**
• **Williams, Byron, Dr.**
**Sheffield,**
**South Yorkshire S20 1BG (GB)**

(74) Representative: **Herman de Groot, Johan Willem et al**
**Tata Steel**
**Group Intellectual Property Services**
**P.O. Box 10000**
**1970 CA IJmuiden (NL)**

(56) References cited:
**EP-A- 0 282 619**

• PATENT ABSTRACTS OF JAPAN vol. 0141, no. 80 (C-0708), 11 April 1990 (1990-04-11) & JP 2 028274 A (NIPPON PAINT CO LTD), 30 January 1990 (1990-01-30)
• PATENT ABSTRACTS OF JAPAN vol. 1998, no. 09, 31 July 1998 (1998-07-31) & JP 10 088036 A (NIPPON PARKERIZING CO LTD), 7 April 1998 (1998-04-07)

**Description**

The present invention relates to coatings and particularly coatings, which are used in the prevention or inhibition of the corrosion of metal-based products such as mild steel, zinc coated steel, aluminum or magnesium, for example. The invention finds particular application in the corrosion protection of coil coated mild steel material and long products.

The term coil coated or mild steel is to be understood to include strip steel, or steel based products having a gauge in the range 0.4 to 2mm, either with or without metallic coatings based on zinc or zinc/aluminium alloys. An alloy composition applied to the steel surface comprises from 100% zinc to 100% aluminum.

Similarly the term long product is to be understood to include plate based products, hot rolled sections having a gauge up to 25mm, which are used in applications such as the construction industry, bridge building, rail and maritime industries, pipe formation and piling industries.

The corrosion protection of metal-based products is currently achieved by the multiple coatings applied thereto. Thus, a corrosion protected mild steel strip, for example, generally comprises a steel strip having a gauge of about 1mm which has a thin film of zinc ($20\mu$m, for example) applied to either side thereof. The metallic layers are then pre-treated with a coating comprising a thin layer ($0.1\mu$m) of ether a chromate based or a chromate free composition to provide good adhesion between the underlying metal substrate and an overlying primer layer. Typical chromate free systems include silane, zirconia or titania based compounds. Because the pre-treatment layer is so thin, it will be appreciated that the primer layer is effectively applied almost to the surface of the metal. The primer layer may comprise a thin (5 $\mu$m) coating of a polyester or a polyurethane based resin with strontium chromate pigment or a chromate free pigment derived from phosphate, for example. Further protection is afforded by the provision of a relatively thin (10 - $50\mu$m) backing coat on one side of the strip and a thicker (20 to $300\mu$m) topcoat on the other side of the strip.

The coated metal products generally demonstrate good corrosion resistance. However, if the integrity of the product is compromised by cutting or scratching the product during transportation or construction, for example, exposure of the underlying metal surface results in corrosion of the product at the metal surface, which eventually leads to delamination of the organic coating adjacent to any cut edges as described below. Such surface and cut edge corrosion further impairs the integrity of the product thereby compromising the useful life thereof.

When the coated surfaces of the zinc coated mild steel strip described above are exposed to atmospheric corrosive agents as a result of cutting or scratching, for example, the zinc preferentially dissolves to produce electrons and cathodic zinc ions. Oxygen and water react with the electrons produced at the cathodic zinc site to produce hydroxyl ions. As a result there is an increase in the local pH within the coating, which leads to degradation of the coating. The incorporation of chromate or phosphate ions into the coating reduces the rate of coating degradation by inhibiting the dissolution of zinc ions and the consequent production of hydroxyl ions at the cathodic sites. The zinc ions react with chromate ($CrO_4^{2-}$) or phosphate in the primer to produce a zinc chromate ($ZnCrO_4$) or zinc phosphate ($Zn_3(PO_4)_2$) precipitate. Metallic zinc is therefore sacrificed to produce a chromate or phosphate protective layer and to therefore inhibit the loss of iron from the steel surface. The corrosion mechanisms are set out below:

Zinc dissolves to produce zinc ions and electrons at an anodic site

$$Zn_{(s)} \longrightarrow Zn^{2+}_{(aq)} + 2e^-$$

Oxygen and water react with the electrons at the cathodic site to produce hydroxyl ions.

$$O_{2(g)} + H_2O_{(aq)} + 4e^- \longrightarrow 4OH^-_{(aq)}$$

The zinc ions react with chromate ions in the primer or pre-treatment to produce a zinc chromate precipitate.

$$Zn^{2+}_{(aq)} + 2CrO_4^{2-}_{(aq)} \longrightarrow ZnCrO_{4(s)}$$

Alternatively, the zinc ions react with phosphate ions to produce a zinc phosphate precipitate:

$$3\ Zn^{2+}_{(aq)} + 2PO_4^{3-}_{(aq)} \longrightarrow Zn_3(PO_4)_{2(s)}$$

Dispersions of sparingly soluble chromate and phosphate salts have been used extensively as inhibitor pigments for this purpose. Chromate is generally regarded as an oxidizing agent and anodic inhibitor but there is also evidence that, in its reduced form ($Cr^{3+}$) it may inhibit the cathodic processes.

It will therefore be appreciated that the currently used coatings which surround the cut or scratched exposed steel surface provide some temporary protection to the underlying steel surface thereto until the zinc in the exposed zinc layer is consumed.

There are several disadvantages with this system. Firstly, chromate based corrosion inhibitors are known to be toxic and many Cr(VI) compounds are carcinogenic. Secondly, many of the phosphate inhibitors form compounds that are soluble in acidic environments leading to osmotic blistering of the coating. Thirdly, the provision of corrosion inhibition involves the application of multiple coats to the surfaces of the galvanized or mild steel strip, which is both time consuming and expensive and in addition, the differences in thickness between the backing coat and top-coat in coil coated materials lead to differential corrosion of the upper and lower surfaces of the steel strip at the cut edges thereof resulting in delamination of the organic coating layer. For corrosion at cut edges, in particular, since the topcoat is thicker than the backing coat, the rate of diffusion of oxygen through the topcoat is slower and as a consequence less oxygen reaches the top surface of the metal. This means that corrosion below the topcoat is predominately anodic in nature leading to the production of zinc ions and corrosion below the backing coat is predominately cathodic in nature leading to the production of hydroxyl ions. The cut edge corrosion products include zinc hydroxide in the form of a gel, which is porous and leads to delamination and loss of the protective coating.

It should be understood that the term "top surface" when used in relation to the metal surface is to be understood to mean that surface of the metal to which the top-coat would normally be applied, that is to say the thicker of the protective coatings. Similarly, the term "back surface" should be understood to mean that surface of the metal to which the back coat or thinner of the protective coatings is normally applied.

There is therefore a need for a corrosion inhibitive coating, which is free of chromate or phosphate based corrosion inhibitors and is environmentally more acceptable. There is also a need for a coating, which comprises fewer layers.

The use of chromate free corrosion inhibitive primer coatings for the protection of steel substrates used in the construction industry is disclosed in WO 02/08345 A1. The chromate free corrosion inhibitors comprise natural clay minerals in which the anionic charge of the aluminosilicate layers is neutralised by intercalated cations, which are able to form an insoluble precipitate with hydroxyl ions formed at the cathodic site. The cations are also able to exchange with the sacrificial zinc ions produced at the cathodic site. The corrosion inhibitors of WO 02/08345 A1 are typically applied to the substrate in the form of a paint, varnish or lacquer. Such coatings are adequate where the rate of the cathodic and anodic corrosion mechanisms is comparable on both sides of the metal strip. However, their ability to provide corrosion resistance at cut edges is compromised where the predominant corrosion mechanism on one side of the metal strip differs from that on the other side.

There is, therefore a further a need for a coating, which provides good corrosion resistance against the differential aeration corrosion mechanisms occurring adjacent the top and back surfaces of the zinc coated steel strip as a result of corrosion at the cut edges thereof (cut edge corrosion). The present invention addresses both this need and the needs referred to above.

The present inventors have found that by providing a coating comprising a corrosion inhibiting amount of an anion exchange matrix (anodic inhibitor delivery) on the top surface of the metal product and a coating comprising a corrosion inhibiting amount of a cation exchange matrix (cathodic inhibitor delivery) on the back surface of the metal product it is possible to prevent or inhibit the differential corrosion mechanisms occurring at the top and back surfaces. In this way, it is possible to protect coil coated or mild steel strip products from corrosion.

A first aspect of the present invention provides a corrosion inhibited metal product comprising a metal product having a top and a back surface, the back surface thereof being provided with a coating comprising a carrier and a corrosion inhibiting amount of a cation exchange matrix comprising cations, which form an insoluble precipitate with hydroxyl ions formed as a result of the corrosion reaction; the product having provided on the top surface thereof a coating comprising a carrier and a corrosion inhibiting amount of an anion exchange matrix comprising anions, which form an insoluble precipitate with cations formed at the metal surface as a result of the corrosion process.

For example, cerium ions provided in the coating provided on the back surface react with the hydroxyl ions produced at the cathodic site to produce an insoluble cerium hydroxide precipitate, as illustrated below:

$$Ce^{3+} + 3OH^- \longrightarrow Ce(OH)_3$$

The coatings applied to the top and back surfaces of the metal product are suitably able to replace the primer coats currently applied in the corrosion protection of the metal product.

Without wishing to be constrained, it is believed that the insoluble precipitates formed by the ions in the ion exchange matrices of both the coatings applied to both the top and back surfaces of the product provide a protective layer on the surface of the metal, which inhibits the further corrosion of the metal surface when the product is cut or scratched. The provision of the cation exchange matrix on the back surface of the product inhibits the predominantly cathodic corrosion mechanisms occurring at that surface. Similarly, the provision of the anion exchange matrix on the top surface of the product inhibits the predominantly anodic corrosion mechanisms occurring there.

By the term "insoluble precipitate" it should be understood to mean that the solubility constant in water of the precipitate is less than $10^{-32}$.

The coating provided on the back surface of the metal product according to the first aspect of the invention will hereinafter be referred to as the back surface primer. Similarly, the coating provided on the top surface of the aforementioned mild steel strip will hereinafter be referred to as the top-surface primer. It will be appreciated that the primers applied to the top and back surfaces in accordance with the first aspect of the invention are distinguished from conventional primers of the prior art by virtue of the presence of ion exchange matrices in both the top and back surface primer layers.

Both the top and back surface primers of the first aspect of the invention can be applied to the pre-treated metal surface and are characterised by good adhesion thereto.

The primers may also be formed as a laminate with their respective overlying top or back coat and this laminated coating may be applied directly to the metal surface thereby obviating the need for applying the primer coats and top or back coats in separate steps. In addition, it has surprisingly been found that the coating composition is able to provide the metal products with corrosion resistance over a prolonged period of time. The use of phosphate and the toxic conventional chromate containing inhibitors can be eliminated or significantly reduced. In addition the accelerated corrosion associated with differential aeration at the top and back surfaces of the metal product as a result of cut edge corrosion can be prevented or significantly reduced.

The present inventors have found that each of the coatings suitably comprise a homogeneous mixture of the carrier and the ion exchange matrix. Other suitable ingredients present in the coatings according to the present invention may include suspension agents, and extenders (such as silica), flow agents (typically acrylic), cross linkers (typically amines) and any other further components of the type suitable for inclusion in corrosion inhibiting coatings as provided by the present invention, which are compatible with the ion exchange matrices present therein.

Suitable carriers include any polymers typically used in the formulation of conventional primers for metal products. The carrier provides a vehicle for the ion exchange matrices and facilitates the adhesion of both the top and back surface primers of the invention to the underlying metal substrate. Suitable carrier compounds include those selected from the group comprising polyvinyl chlorides, polyurethanes, polyester resins, epoxy resins, polyacetals (such as polyvinyl butyral) and alkyd resins and the like.

The back surface primer suitably comprises from 5 to 15% W:W of a cation exchange matrix, preferably 5 to 10% W:W with the remainder comprising the carrier and other suitable ingredients.

The cation loading of the cation exchange matrix in the coating is typically in the range 60 to 90% W:W, preferably 80 to 90% W:W. Any cations, which are able to form insoluble hydroxides can be used. However, preferred cations include calcium, cerium, strontium, lanthanum, yttrium, aluminium and magnesium. Cerium is particularly preferred.

The cation exchange matrix is generally incorporated into the final formulation in the form of a freeze dried powder or colloidal dispersion in a polar solvent having a particle size of the order of 0.025 to 5 $\mu$m in the exfoliated state. Suitable polar solvents include diols and ethylene glycol. A fully exfoliated state of cation exchanged freeze dried pigments is achieved using the following procedure. The freeze dried pigments are soaked in hydroxy functional solvents, such as ethylene glycol containing 0.1% quaternary ammonium salt (e.g. Dimethyl dioctadecyl ammonium chloride) in a ratio of 5:1 solvent to pigment. Most of the solvent is then removed by vacuum filtering until approximately 1:1 ratio of solvent to pigment is left. The wet pigment is then dispersed in the mill base resins using high speed (3000 rpm/m) stirring for 30 min and then 90 mins in bead mill.

The cation exchange matrix is preferably formed from natural or synthetic nano-clays such as ion exchanged smectite group (bentonite clays). The use of the smectite group of synthetic nano particle clays is preferred. Colloidal dispersions of synthetic clays comprise particles of a size of the order of 0.025 to 0.1$\mu$m in diameter. Typically the exfoliated form is a disc shaped individual crystal with a thickness of 1nm and a diameter of 25nm. Naturally occurring clays, on the other hand, comprise disc shaped particles having a thickness of 1nm and a diameter of 1$\mu$m in the exfoliated form. It has been surprisingly found that these physical differences mean that the exfoliation process for synthetic clays is much easier than that for natural clays. Synthetic clays are therefore much easier to incorporate into a polymer matrix, have increased ion exchange capacity, improved barrier properties and greater thermal stability compared to natural clays. Furthermore, synthetic clays provide for improved adhesion against naturally occurring materials, since the smaller particle size provides for a more intimate contact between the polymer and the substrate.

The cation exchange matrices have a solubility constant in water of less than $10^{-30}$ and can therefore be considered to be essentially water insoluble. The corrosion inhibitor cations are only released when the matrix comes into contact with the metal ions produced during the corrosion process at the metal surface. This prevents premature loss of the corrosion inhibiting cations through rainwater leaching or degradation, for example. Such water insolubility also substantially prevents the formation of osmotic blisters, thereby simplifying the formulation of coatings.

The topcoat primer suitably comprises from 5 to 15% W:W of an anion exchange matrix and preferably from 5 to 10% W:W of an anion exchange matrix, the remainder being carrier and optionally other suitable compounds. The anion exchange matrix comprises anions, which are able to form insoluble precipitates with metal ions generated as a result of the corrosion process at the metal surface.

Without wishing to be constrained, it is believed that the production of hydroxyl ions and subsequent rise in pH upon exposure of the metal surface to corrosive elements releases anions ($A^{z-}$) from the anion exchange matrix, which then form insoluble metal and mixed metal precipitates with the metal ions formed at the surface of the metal from the corrosion process in accordance with the following mechanism. In addition the anion exchange matrix is also believed to scavenge any free chloride ions present in the top surface primer, either as a result of their diffusion from the environment or by degradation of the material of the topcoat itself.

$$MA^{x+} + YA^{z-} \longrightarrow M_{xz}A_{yn}$$

The anions ($A^{z-}$) released increase the polarisation of the anode by reaction with the ions of the corroding metals to produce either thin passive films or mixed metal layers, which coat the anode (active metal surface) and decrease the electron transfer. Typically the released anions lead to a shift in the electrochemical potential of the free corrosion potential of the active metal surface to more positive values, which is accompanied by a reduction in the free corrosion current.

The thickness of the top surface primer is, in general, of the order of 5 to 10 $\mu$m.

The anion loading of the anion exchange matrix in the top surface primer is typically in the range 10 to 20%, preferably from 10 to 12%. The anion loading may, however, be increased by using hydrothermal synthesis. Any anions which are able to form insoluble precipitates with metal ions can be used. However, preferred anions include pyrophosphate ($P_2O_7^{2-}$), chromate ($CrO_4^{2-}$), silicate ($SiO_4^{2-}$) and molybdate ($MoO_4^{2-}$). Pyrophosphate ($P_2O_7^{2-}$) ions are particularly preferred.

The anion exchange matrix is generally provided in the form of a powder or colloidal dispersion having a particle size of the order of 0.1 to 1 microns in the exfoliated form.

The anion exchange matrices have a solubility constant in water of less than $10^{-30}$ and can therefore be considered to be essentially water insoluble. The corrosion inhibitor anions are only released when the matrix comes into contact with corrosive electrolytes from the atmosphere. This prevents premature loss of the corrosion inhibiting anions through rainwater leaching, for example. Such water insolubility also substantially prevents the formation of osmotic blisters, thereby simplifying the formulation of primer coatings.

The anion exchange matrix is preferably formed from natural or synthetic cationic nano-clays such as ion exchanged hydrotalcite clays. Hydrotalcite anionic clays are a layered double hydroxide, with the general formula $[M^{2+}_xM^{3+}_{1-x}(OH)_2]^{x+}_{intra}[A^{n-}_{x/n}\cdot zH_2O]^{x-}_{inter}$ where $M^{2+}$ and $M^{3+}$ are metal cations, A is the anion and intra and inter denote the intra layer domain and inter layer space respectively. The host layers are charged positively by replacement of divalent metal cations with trivalent ones. The positive charge is compensated by the interlayer anions. The interlayer anions $A^{n-}$ are exchangeable, and inserting various corrosion inhibitive anions into interlayers (intercalation) can give hydrotalcites with new functions. Hydrotalcites whose interlayer anions are carbonate ($CO_3$-hydrotalcite) decompose to oxide at 500°C, releasing $CO_2$ and $H_2O$ and transform to a $MgO$-$Al_2O_3$ solid; [(Ref- A. Viccari, Applied Clay science, 14 161 (1999)]. Hydrotalcites exhibit an anion-exchange capacity of ~ 3 meq/g [S. Mitaya, *Clays and Clay Minerals,* **31,** 305, (1983) and T. Kameda, T. Yoshioka, M. Uchida and A. Okuwaki, *Chem. Lett.,* 1136, (2000).

Hydrotalcite exhibits a layer structure similar to brucite ($Mg(OH)_2$), but random substitution of $Al^{3+}$ for $Mg^{2+}$ in octahedral positions results in a positively charged layer.

As indicated above, the use of synthetic nano-clays are preferred. Synthetic anionic clays comprise particles of a size of the order of 0.025 to 0.1$\mu$m in diameter. Typically the exfoliated form is a disc shaped individual crystal with a thickness of 0.92nm and a diameter of 25nm. Naturally occurring clays, on the other hand, comprise disc shaped particles having a thickness of 1nm and a diameter of 1$\mu$m in the exfoliated form. As indicated above, this means that the exfoliation process for synthetic clays is much easier than that for natural clays. Synthetic anionic clays are therefore much easier to synthesise with desirable corrosion inhibitive anions and incorporate into a polymer matrix, have increased ion exchange capacity, improved barrier properties and greater thermal stability compared to natural clays. Furthermore, synthetic clays provide for improved adhesion against naturally occurring materials, since the smaller particle size provides for a more intimate contact between the polymer and the substrate.

It will be appreciated from the foregoing that the coatings of the corrosion inhibited mild steel strip according to the first aspect of the invention are therefore able to exhibit "intelligent storage and release" properties, since corrosion inhibiting cations in the cation exchange matrix are only released in response to their contact with corrosive electrolyte once the zinc particles in the area surrounding the exposed steel surface have been consumed. Similarly, the corrosion inhibiting anions in the anion exchange matrix are only released in response to the rise in pH and associated hydroxyl ion production arising from the corrosion process occurring at the metal surface.

The formation of the insoluble coat at the metal surface therefore provides a barrier to the further corrosion of the metal surface. In addition, the inclusion of cationic exchange matrices into the coatings of the invention reduces the amount of toxic corrosion inhibitors that would normally be required to protect the metal product from corrosion. In addition, corrosion protection can be achieved by applying a laminated coating comprising the primer of the invention and its associated top or back coat to the metal surface in a single step thereby saving the time and expense associated with the steps involved in the formation of both a primer and top-coat.

By using a suitable combination of anion and cation exchange matrices in the coatings of the first aspect of the invention, the use of more toxic corrosion inhibitors can be eliminated or significantly reduced. Additionally, since the ion exchange matrices are insoluble, the potential for coating failure arising from osmotic blistering is removed or significantly reduced.

It will be appreciated from the foregoing that by including the ion exchange matrices into a corrosion protective coating, total or partial replacement of the existing corrosion inhibitors by the ions exchange matrices can be achieved.

A second aspect of the invention provides a method for preventing or inhibiting the corrosion of a metal product comprising the steps of applying to the pre-treated top surface thereof a coating comprising a corrosion inhibiting amount of an anion exchange matrix comprising anions, which form an insoluble precipitate with cations formed at the metal surface as a result of the corrosion process and applying to the pre-treated back surface thereof a coating comprising a corrosion inhibiting amount of a cation exchange matrix comprising cations, which form an insoluble precipitate with hydroxyl ions formed as a result of the corrosion reaction.

As indicated above, the coatings applied to the top and back surfaces of the metal product are suitably able to replace the primer coats of the prior art.

The top and back surfaces may be chemically or surface pre-treated prior to the application of the primer coats. The metal product is preferably cleaned prior to the pre-treatment step. If the metal product is in the form of a strip, it is preferably cleaned with either an alkali or plasma etch prior to the pre-treatment. If the metal product is a long product as described above, it is more suitably cleaned by abrasive blast cleaning.

Where the metal products are steel based strip products, they are preferably coated with either zinc or aluminium or a zinc aluminium alloy prior to the application of the top and back surface primers described above.

The top and back surface primers can be applied to the metal surface by coil coating, painting, spraying or laminating techniques, which are well known to a skilled person.

It will be appreciated that the invention also provides the use of a first composition comprising a carrier and a cationic exchange resin and a second composition comprising a carrier and an anionic exchange resin for preventing or inhibiting the corrosion of a mild steel strip.

A third aspect of the invention provides a corrosion inhibiting composition for a metal product comprising a carrier and a corrosion inhibiting amount of an anion exchange matrix comprising anions, which form an insoluble precipitate with metal ions formed at the surface of the metal from the corrosion process thereby to prevent or inhibit corrosion of the underlying metal surface.

The composition according to the third aspect is suitably used as a top surface primer and can be formed as a laminated layer with its respective top-coat, which can then be directly applied to the top surface of the metal product, thereby obviating the need to apply the primer and top-coat in separate steps. Such a laminate may be used to replace both the primer and topcoat of conventionally coated metal products.

Suitable carriers for use in the compositions of the third aspect of the invention include, as indicated above, any of the polymers typically used in the formulation of conventional back and top-coats for coil coated or mild steel strip products. The carrier provides a vehicle for the ion exchange matrices and facilitates the adhesion of both the top and back coats of the invention to the underlying metal substrate. Suitable carrier compounds include those selected from the group comprising polyvinyl chlorides, polyurethanes, polyester resins, epoxy resins, polyacetals (such as polyvinyl butyral) and alkyd resins. Polyester resins are particularly preferred. Other suitable ingredients present in the coatings according to the present invention may include suspension agents, extenders (such as silica), flow agents (typically acrylic), cross linkers (typically amines) and any other further components of the type suitable for inclusion in corrosion inhibiting coatings as provided by the present invention, which are compatible with the ion exchange matrices present therein.

As indicated above, the anion exchange matrix suitably comprises from 5 to 15% W:W of an anion exchange matrix and preferably from 5 to 10% W:W of an anion exchange matrix, the remainder being carrier and optionally other suitable ingredients as indicated above. The anion exchange matrix comprises anions, which are able to form insoluble precipitates with metal ions generated as a result of the corrosion process at the metal surface.

The anion loading of the anion exchange matrix in the coating is typically in the range 10 to 22%, preferably from 10 to 12%. The anion loading may, however, be increased by using hydrothermal synthesis. Any anions which are able to form insoluble precipitates with metal ions can be used. However, preferred anions include pyrophosphate $(P_2O_7^{2-})$, silicate $(SiO_4^{2-})$ and molybdate $(MoO_4^{2-})$. Pyrophosphate $(P_2O_7^{2-})$ ions are particularly preferred.

The anion exchange matrix is generally provided in the form of a powder having a particle size of the order of 0.1 to 1 microns in the exfoliated form.

The anion exchange matrices have a solubility constant in water of less than $10^{-30}$ and can therefore be considered to be essentially water insoluble. The corrosion inhibitor anions are only released when the matrix comes into contact with corrosive electrolytes from the atmosphere. This prevents premature loss of the corrosion inhibiting anions through rainwater leaching, for example. Such water insolubility also substantially prevents the formation of osmotic blisters, thereby simplifying the formulation of primer coatings.

The anion exchange matrix is preferably formed from natural or synthetic cationic nano-clays such as ion exchanged hydrotalcite clays. Hydrotalcite anionic clays are a layered double hydroxide, with the general formula $[M^{2+}_xM^{3+}_{1-x}(OH)_2]^{x+}_{intra}[A^{n-}_{x/n}\cdot zH_2O]^{x-}_{inter}$ where $M^{2+}$ and $M^{3+}$ are metal cations, A is an anion and intra and inter denote the intra layer domain and inter layer space respectively. The host layers are charged positively by replacement of divalent metal cations with trivalent ones. The positive charge is compensated by the interlayer anions. The interlayer anions $A^{n-}$ are exchangeable, and inserting various corrosion inhibitive anions into interlayers (intercalation) can give hydrotalcites with new functions. Hydrotalcites whose interlayer anions are carbonate ($CO_3$-hydrotalcite) decomposes to oxide at 500°C, releasing $CO_2$ and $H_2O$ and transform to a $MgO$-$Al_2O_3$ solid as indicated above.

Hydrotalcite exhibits a layer structure similar to brucite ($Mg(OH)_2$, but random substitution of $Al^{3+}$ for $Mg^{2+}$ in octahedral positions results in a positive charge layer [(Ref- A. Viccari, Applied Clay science, 14 161 (1999)]. Hydrotalcites exhibit an anion-exchange capacity of ~ 3 meq/g [S. Mitaya, *Clays and Clay Minerals,* **31,** 305, (1983) and T. Kameda, T. Yoshioka, M. Uchida and A. Okuwaki, *Chem. Lett.,* 1136, (2000).

As indicated above, the use of synthetic nano-clays are preferred. Synthetic anionic clays comprise particles of a size of the order of 0.025 to 0.1$\mu$m in diameter. Typically the exfoliated form is a disc shaped individual crystal with a thickness of 0.92nm and a diameter of 25nm. Naturally occurring clays, on the other hand, comprise disc shaped particles having a thickness of 1nm and a diameter of 1$\mu$m in the exfoliated form. As indicated above, this means that the exfoliation process for synthetic clays is much easier than that for natural clays. Synthetic anionic clays are therefore much easier to synthesise with desirable corrosion inhibitive anions and incorporate into a polymer matrix, have increased ion exchange capacity, improved barrier properties and greater thermal stability compared to natural clays. Furthermore, synthetic clays provide for improved adhesion against naturally occurring materials, since the smaller particle size provides for a more intimate contact between the polymer and the substrate.

It will be appreciated from the foregoing that the compositions of the third aspect of the invention are therefore able to exhibit "intelligent storage and release" properties, since the corrosion inhibiting anions in the anion exchange matrix are only released in response to the rise in pH and associated hydroxyl ion production arising from the corrosion process occurring at the metal surface.

It will be appreciated that the compositions according to the third aspect of the invention can be applied to a metal product to prevent or inhibit the corrosion thereof. A fourth aspect of the invention provides a method of preventing or inhibiting the corrosion of a metal product comprising applying to the pre-treated surface thereof a layer of a composition according to the third aspect of the invention. The metal surfaces are preferably cleaned as described above and undergo a chemical or surface pre-treatment prior to the application of the primer coat.

If the metal product is formed from mild steel, the surfaces are preferably coated with either zinc or aluminium or a zinc aluminium alloy prior to the application of the top and back surface primers described above.

The top and back surface primers can be applied to the metal surface by coil coating, painting, spraying, extruding, injection moulding or laminating techniques, which are well known to a skilled person. Laminating techniques are particularly preferred.

A fifth aspect of the invention provides a metal product having provided thereon a coating comprising a carrier and a corrosion inhibiting amount of an anion exchange matrix comprising anions, which form an insoluble precipitate with cations formed at the metal surface as a result of the corrosion process.

A sixth aspect of the invention provides a corrosion inhibiting composition for a metal product comprising a carrier and a corrosion inhibiting amount of a cation exchange matrix comprising cations, which form an insoluble precipitate with hydroxyl ions formed at the surface of the metal from the corrosion process thereby to prevent or inhibit corrosion of the underlying metal surface, wherein the cation exchange matrix comprises one or more synthetic clays. As indicated above, it has been found that the use of synthetic clays makes the exfoliation process easier than for natural clays. Without wishing to be constrained, it is believed that the superior properties of synthetic clays can be attributed to their smaller particle size. Synthetic clays are therefore much easier to incorporate into a polymer matrix, have increased ion exchange capacity, improved barrier properties and greater thermal stability compared to natural clays. Furthermore, synthetic clays provide for improved adhesion against naturally occurring materials, since the smaller particle size provides for a more intimate contact between the polymer and the substrate.

A seventh aspect of the invention provides a method of preventing or inhibiting the corrosion of a metal product comprising applying to the pre-treated surface thereof a layer of a composition according to the sixth aspect of the invention. As indicated above, the metal surfaces are preferably cleaned and pre-treated prior to the application of the coatings.

As indicated above, where the metal product is formed from mild steel the surfaces may preferably be coated with either zinc or aluminum or a zinc aluminium alloy prior to the application of the top and back coats described above. Application of metallic coating is not, however, a prerequisite and equally top and backing coats may be applied to the surfaces of the cleaned and pre-treated cold reduced steel.

The top and back surface primers can be applied to the metal surface by coil coating, painting, spraying or laminating techniques, which are well known to a skilled person. Laminating techniques are particularly preferred.

An eighth aspect of the invention provides a metal product having provided thereon a coating comprising a carrier and a corrosion inhibiting amount of a cation exchange matrix comprising cations, which form an insoluble precipitate with hydroxyl ions formed at the metal surface as a result of the corrosion process.

The invention will now be described with reference to the following non-limiting examples. Variations on these examples falling within the scope of the invention will be apparent to a person skilled in the art.

### Examples

### Example 1

### Preparation of a Pyrophosphate or Chromate containing Anion Exchange Matrix

A synthetic hydrotalcite clay was prepared by heating 100g quantities of hydrotalcite at 550°C for 18 hours in an inert atmosphere to yield mixed metal oxides. This was added to two liters of 0.5M of the respective anion salt solution which is degassed prior to dispersion at room temperature and stirred for 60 min. Subsequently, the ion exchanged HT clays prepared were washed by repeated cycles of centrifugation at 1000 rpm and re-dispersion in fresh diluted water until cations ($Na^+$ or $K^+$) were no longer detected using ICP-AES.

The anion exchange capacity of the prepared matrix was determined by measuring the concentration of the relevant anion (in this case chromate or pyrophosphate) in the exhaustive back exchange solution of a gram of the matrix and was found to be 70 milli equivalents/100g.

### Preparation of a Primer containing Anion Exchange Matrix

A pyrophosphate or chromate containing anion exchange matrix prepared as described above was mixed with a base comprising a proprietary based primer system using a Dispermat™ shear mixer under constant stirring at 1000 rpm at room temperature for 30 minutes, followed by repeated cycles through a 50ml Eiger™ horizontal bead, mini mill to produce a homogeneous dispersion of a modified primer containing 12% W:W anion exchange matrix having a particle of diameter 1 to 5μm. The level of particle dispersion was measured using a Hegman draw gauge.

The modified primer so prepared was applied to a pre-cleaned sheet steel substrate (0.5 to 0.7mm gauge), which had been pretreated with either a proprietary chromate based system or a chromate free system such as a proprietary silane or phosphate containing system. Zirconia or titania based systems could also be used. The primer was applied to a thickness of $5 \pm 1$ μm of dry film to the substrate and cured in accordance with the proprietary recommendations.

The modified primer was applied to the prepared substrate to a typical thickness of between $5 \pm 1$ μm by the drag down method using gauged wire wound coating bars supplied by Sheen instruments in accordance with ASTM D4147 and as described in C. Lowe, "Test methods for UV and EB curable coatings", Sita Technology, 1982. The coatings were cured to their recommended peak metal temperature for the base coat used in a Mathis Labdryer™, a horizontal tray oven drier.

Coating thickness was determined using a magnetic induction Fisher Permascope (Sigma Duplex MMS). Measurements were made by placing an electrical probe on the coating and developing an electromagnetic field on the base metal. The variation in the electromagnetic field determined by the probe is a function of the distance between the probe and the base metal, thereby providing an indication of the coat thickness.

The primer could be used to coat both strip based products and long products as described above.

**Example 2**

**Preparation of a Cation Exchange matrix**

A cerium exchanged bentonite matrix was prepared by replacing the naturally occurring calcium ions in the bentonite clay with $Ce^{3+}$, following a standard exchange procedure as described in JM Adams et al, Journal of Catalysis, 58, 1979, 238. 200g quantities of the "raw" bentonite were stirred in 1 litre volumes of 1M solutions of $CeCl_3$ (99.9% purity, Aldrich) in distilled water for 24 hours. The matrix was separated from the liquor using a Hertz centrifuge at 2000 rpm. The matrices were then washed in fresh distilled water until all residual non-exchanged ions were removed, before undergoing a final wash with ethanol to remove water. The resulting matrix was dried in an oven at 70°C for four hours. Pigment preparation was completed by grinding and milling of the dried powders to attain a suitable particle size ($<2\mu m$ diameter) for inclusion in primer formulations.

The composition of the bentonite prior to and following ion exchange was investigated by acid digestion of the inorganic matrix in aqua regia followed by inductively coupled plasma/mass spectrometry analysis. This indicated that the level of exchangeable sodium and calcium cations present in the naturally occurring clay was 10700 and 7000 mg/kg respectively. Following ion exchange these cations were seem to have been replaced with 31500 mg/kg $Ce^{3+}$ with 4700 m/kg of calcium ions remaining unexchanged.

This procedure can be used in the preparation of cation exchange matrices containing calcium, strontium, lanthanum, yttrium, aluminum and magnesium by replacing the 1M solutions of $CeCl_3$ with suitable solutions of appropriate salts of said cations.

**Preparation of a Primer containing a Cation Exchange Matrix**

The nature of the primer compositions prepared depends upon the products to which they are to be applied. When the metal product is a long product, the primer could, for example, be zinc silicate based. The preparation of primers suitable for both strip based products and long products is described below.

**(a) Preparation of a Zinc Silicate Pre-fabrication Primer containing a Cation Exchange Matrix for application to Long Products**

A commercially available pre-fabrication primer containing 122.7g of metallic zinc, 138 g of china clay and 222.8 g of a silicate based inorganic liquid solvent additives, which contained 1% HCl and other additives dispersed in ethanol was prepared by adding the powder components to the liquid under constant stirring at 500rpm using a Dispermat™ shear mixer. This product was used as a control.

A cerium containing cation exchange matrix prepared as described above (5% w:w) was mixed replacing a amount of metallic zinc from the reference formulation such that the Pigment Volume Concentration is constant in all cases, with a liquid base comprising a proprietary silicate primer system using a Dispermat™ shear mixer under constant stirring at 500 rpm at room temperature, followed by repeated cycles through a 50ml Eiger™ horizontal bead, mini mill to produce a homogeneous dispersion of a modified primer containing 5% W:W cation exchange matrix having a particle diameter of 5 to 15$\mu$m. The level of particle dispersion was measured using a Hegman draw gauge.

The modified primer containing 104.6g of metallic zinc, 18 g of Ion exchanged natural clay, 127.67 g of china clay and 222.8 g of a silicate based inorganic liquid solvent additives, which contained 1% HCl and other additives in ethanol was prepared by adding the powder components to the liquid under constant stirring at 500rpm using a Dispermat™ shear mixer. The modified primer was applied to a steel plate substrate (3 to 30 mm gauge), which had been grit blast or shot blasted cleaned BS7079 (part A) SA 2½ prior to coating.

The modified primer was applied to the pre-prepared substrate to give a typical dry film thickness of between 10 and 30 $\mu$m by conventional spray or airless spray technique as described in C.G. Munger, "Zinc Silicate Coatings, 40 years experience, Corrosion Conference 1984", London, 12 - 14 November. The coatings were cured at ambient room temperature.

**(b) Preparation of a Coil Coating Primer containing a Cation Exchange Matrix for application to Strip Products**

A fully exfoliated state of cation exchanged freeze dried pigments is achieved using the following procedure. Freeze dried pigments are soaked in hydroxy functional solvents, such as ethylene glycol containing 0.1% quaternary ammonium salt (e.g. Dimethyl dioctadecyl ammonium chloride) in a ratio of 5:1 solvent to pigment. Most of the solvent is then removed by vacuum filtering until approximately1:1 ratio of solvent to pigment is left. The wet pigment is then dispersed in the mill base resins using high speed (3000 rpm/m) stirring for 30 min and then 90 mins for bead mill, for example. A cerium containing cation exchange matrix (5% w:w) was mixed with a base comprising a proprietary polyester or polyurethane based primer system using a Dispermat™ shear mixer under constant stirring at 500 rpm at room temperature for 60 minutes in a polar solvent, followed by repeated cycles through a 50ml Eiger™ horizontal bead, mini mill to produce a homogeneous dispersion of a modified primer containing 5 to 12% W:W cation exchange matrix having a particle diameter of 5 to 15$\mu$m. The level of particle dispersion was measured using a Hegman draw gauge.

The modified coil coating primer so prepared was applied to a surface-cleaned sheet steel plate substrate (0.5 to 07mm gauge), which had been pre-treated by being hot dipped galvanized steel (in a zinc/aluminium (99.85% Zinc and 0.15% Aluminum) composition prior to coating.

The modified coil coating primer was applied to the prepared substrate to a typical dry film thickness of between 5 to 10 $\mu$m by the drag down method using gauged wire wound coating bars supplied by Sheen instruments. The coatings were cured to their recommended peak metal temperature for the base coat used in a Mathis Labdryer™, a horizontal tray oven drier.

**Example 3**

**Salt Spray Testing**

Separate pre-cleaned cold rolled mild steel Q panels (thin gauge steel material) or grit blast or shot blast cleaned steel plates, were coated with zinc silicate pre-fabrication primer by conventional spray or airless spray techniques (as described above) to a dry film coating thickness of 15 to 20 $\mu$m on one side only with respectively either the control primer or the modified zinc silicate primer according to the invention. This was carried out for the pre-fabrication primer described in Example 2a. The modified coil coating primer was applied to the chromium pre-treated galvanised steel substrate (0.7 mm gauge) to a typical dry film thickness of between 5 to 10 $\mu$m by the drag down method using gauged wire wound coating bars supplied by Sheen instruments, describe in Example 2b. Adhesive tape was applied to the back and edges of the prepared samples to prevent water from directly reaching the underlying metal at the edges. The front of each sample was scored with a cross to provide information on the corrosion behaviour of the coating around the defects. The samples were placed in racks in a cabinet with the front surface inclined towards the spray nozzle. Standard accelerated salt spray tests were carried out on the test samples for 1000 hours in accordance with ASTM B117/97. The tests are basically carried out in temperature and pH regulated cabinets (35°C, pH = 6.5 to 7.2) in which jets of 5% sodium chloride were continuously sprayed onto the samples under test.

**Humidity testing**

Standard humidity tests (BS3900 F2) are used to examine the behaviour of samples in hot and steamy environments such as those encountered in countries with warm, wet weather. The samples are placed in a closed cabinets in which the relative humidity was maintained at approximately 95 to 100% and the temperature of the air space is cycled continuously between 42°C to 48°C over a period of 60$\pm$ 5 minutes. Air is circulated by means of a fan.

**Results**

greater resistance to corrosion is shown by the post-fabrication zinc silicate primer of the invention compared to the commercial primer of the control. Post fabrication primers have high percentage of zinc loading and are applied after the fabrication of steel structures being carried out.

greater resistance to corrosion is shown by the pre-fabrication zinc silicate primer of the invention (Example 2a above) compared to the commercial primer of the control. Pre-fabrication primers have low percentage of zinc loading (around 35 W/W% solid), a thin layer of 15 to 25 microns of a primer on the steel, just to achieve the protection during the transportation and storage of newly manufactured steels. Lower levels of zinc loading provide the ability to weld and cut during the fabrication of the structure. Pre-fabrication primer may / may not removed before painting with a new coating system after the fabrication of the structure. photographs were taken after standard humidity tests (BS 3900 F2) were carried out for both the control and the sample coated with the primer of the invention. The standard humidity test is a useful test to determine how samples will behave in hot and steamy environments such as those provided by countries with warm, wet weather. The temperature of the air space is cycled continuously from 42°C to 48°C and back again every 60$\pm$5 minutes. Air is circulated by means of a fan.

the exposed surface of the sample coated with the control primer (in each case) corroded on exposure to the hot and steamy environment. However, the exposed surface of the sample coated with the primer of the invention (in each case) is clean and remains substantially free from corrosion.

**Electrochemical testing**

Open circuit potential (OCP) measurements were carried out in a cell containing a platinum counter electrode and a reference electrode (saturated calomel electrode, SCE: $E^0 \approx 0.241$ V vs. NHE). Samples were immersed in 0.1M NaCl solution as a function of time for 60 hours. Electrochemical impedance spectroscopy (EIS) measurements were carried out using a Solartron 1250 frequency response analyzer coupled with a Solartron 1286 electrochemical interface in the frequency range of 60 kHz - 0.01 Hz with 5 mV a.c. amplitude versus the OCP.

**Results**

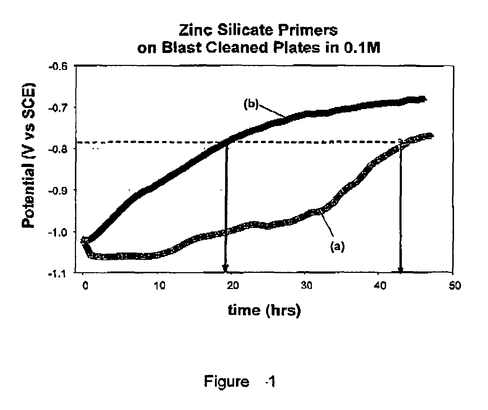

Figure 1 graphically illustrates the greater resistance to corrosion shown by the pre-fabrication zinc silicate primer of Example 2a of the invention compared to the commercial primer of the control. The results shown in Figure 1 are of electrochemical corrosion tests carried out for both the control (b) and the sample (a) of the coated with the primer of the invention (5% Zn replaced with IE - natural clay).

**Example 4**

**Preparation of Coil Coated Mild Steel Strips**

A cerium or lanthanum containing cation exchange matrix or a pyrophosphate or chromate containing anion exchange matrix was mixed with a base comprising a proprietary polyester or polyurethane based back-coat system using a Dispermat™ shear mixer under constant stirring at 5000 rpm at room temperature for 60 minutes, followed by repeated cycles through a 50ml Eiger™ horizontal bead, mini mill to produce a homogeneous dispersion of a modified primer containing 5 or 10% W:W cation or anion exchange matrix having a particle diameter of $5\pm1$ $\mu$m. The level of particle dispersion was measured using a Hegman draw gauge.

The modified primer so prepared was applied to the top surface of a pre-cleaned galvanised steel substrate (0.5 to 07mm gauge) which had been pre-treated with a mixed oxide pre-treatment such as Bonderite 1303 and then sealed with either a proprietary chromate based system (Deoxylite 41™ or Parcolene 62™) or a chromate free system based on a proprietary silane or phosphate containing system. Zirconia or titania based systems could also be used. The primer was applied to the substrate to a thickness of $5\pm1$ $\mu$m of dry film and cured in accordance with the proprietary recommendations.

A modified primer as described in Example 2a was applied to the back surface to a dry film thickness of $5\pm1$ $\mu$m using the drag down method. The coating was cured to the recommended peak metal temperature for the base back-coat using a Mathis Labdryer™, a horizontal tray oven drier.

The modified primer was applied to the prepared substrate to a typical thickness of between $5\pm1$ $\mu$m by the drag down method using gauged wire wound coating bars supplied by Sheen instruments. The coatings were cured to their recommended peak metal temperature for the base coat used in a Mathis Labdryer™, a horizontal tray oven drier.

**Claims**

1. A corrosion inhibited metal product comprising a steel strip having provided on the back surface thereof a primer comprising a carrier and a corrosion inhibiting amount of a cation exchange matrix comprising cations, which form an insoluble precipitate with hydroxyl ions formed as a result of the corrosion reaction; the strip having provided on the top surface thereof a primer comprising a carrier and a corrosion inhibiting amount of an anion exchange matrix comprising anions, which form an insoluble precipitate with cations formed at the metal surface as a result of the corrosion process.

2. A corrosion inhibited metal product according to claim 1, wherein the solubility constants of the insoluble precipitates in water is less than $10^{-30}$.

3. A metal product according to claim 1 or claim 2, wherein the coating provided on the back surface thereof comprises from 5 to 15% W:W of a cation exchange matrix.

4. A metal product according to any one of the preceding claims, wherein the coating provided on the back surface comprises from 10 to 15% W:W of a cation exchange matrix.

5. A metal product according to any one of the preceding claims, wherein the cation loading of the ion exchange matrix is 60 to 90% W:W.

6. A metal product according to any one of the preceding claims, wherein the cation exchange matrix comprises one or more cations selected from the group comprising calcium, cerium, strontium, lanthanum, yttrium, aluminum and magnesium.

7. A metal product according to any one of the preceding claims, wherein the cation exchange matrix is a natural or a synthetic nano-clay.

8. A metal product according to claim 7, wherein the cation exchange matrix Is a smectite clay.

9. A metal product according to claim 7 or claim 8, wherein the cation exchange matrix is a synthetic clay.

10. A metal product according to claim 9, wherein the synthetic clay comprises particles having a diameter of 0.25nm in the exfoliated form.

11. A metal product according to any one of the preceding claims, wherein the cation exchange matrix has a solubility constant less than $10^{-30}$.

12. A metal product according to any one of the preceding claims, wherein the coating provided on the top surface thereof comprises from 5 to 15% W:W of an anion exchange matrix.

13. A metal product according to any one of the preceding claims, wherein the coating provided on the top surface thereof has an anion loading of 10 to 22% W.W.

14. A metal product according to anyone of the preceding claims, wherein the anion exchange matrix comprises one or more anions selected from the group comprising pyrophosphate ($P_2O_7^{2-}$), silicate ($SiO_4^{2-}$), molybdate ($MoO_4^{2-}$) and borate ($BO_4^{3-}$).

15. A metal product according to any one of the preceding claims, wherein the anion exchange matrix has a solubility constant in water less than $10^{-30}$.

16. A metal product according to any one of the preceding claims, wherein the anion exchange matrix comprises a natural or synthetic cationic nano-clay.

17. A metal product according to any one of the preceding claims, wherein the anion exchange matrix comprises a hydrotalcite clay.

18. A method for preventing or inhibiting the corrosion of a metal product comprising the steps of applying to the pre-cleaned top surface thereof a primer comprising a corrosion inhibiting amount of an anion exchange matrix comprising anions, which form an insoluble precipitate with cations formed at the metal surface as a result of the corrosion process and applying to the pre-cleaned back surface thereof a primer comprising a corrosion inhibiting amount of a cation exchange matrix comprising cations, which form an insoluble precipitate with hydroxyl ions formed as a result of the corrosion reaction.

19. A method according to claim 18, in which the primers are applied to the top and back surfaces of the metal product by coil coating, painting, spraying or laminating techniques.

20. A corrosion inhibiting composition for a metal product comprising a carrier and a corrosion inhibiting amount of an anion exchange matrix as defined in any one of the preceding claims, which comprises anions that form an insoluble precipitate with metal ions formed at the surface of the metal from the corrosion process thereby to prevent or inhibit corrosion of the underling metal surface.

21. A corrosion inhibited metal product comprising a metal product having provided thereon a coating comprising an anion exchange matrix as defined in claim 20.

22. A method of preventing or inhibiting the corrosion of a metal product comprising applying to the pre-cleaned surface thereof a composition according to claim 20.

**23.** A corrosion inhibiting composition for a metal product comprising a carrier and a corrosion inhibiting amount of a cation exchange matrix comprising cations, which form an insoluble precipitate with hydroxyl ions formed at the surface of the metal from the corrosion process thereby to prevent or inhibit corrosion of the underling metal surface, wherein the cation exchange matrix comprises one or more synthetic clays.

**24.** A composition according to claim 23, wherein the cation exchange matrix comprises 5 to 15%, preferably 5 to 10% W:W of the composition.

**25.** A composition according to claim 23 or claim 24, including zinc.

**26.** A method of preventing or inhibiting the corrosion of a metal product comprising applying to the pre-cleaned surface thereof a layer of a composition according to any one of claims 23 to 25.

**27.** A metal product having provided thereon a coating according to any one of claims 23 to 25.


**Patentansprüche**

**1.** Korrosionsgehemmtes Metallprodukt umfassend ein Stahlband, das auf der rückseitigen Oberfläche davon mit einer Grundierung versehen ist umfassend einen Träger und eine korrosionshemmende Menge einer Kationenaustauschmatrix, die Kationen umfasst, die eine unlösliche Ausfällung mit Hydroxylionen bilden, die aufgrund der Korrosionsreaktion gebildet werden; wobei das Band auf der oberen Oberfläche davon mit einer Grundierung versehen ist, die einen Träger und eine korrosionshemmende Menge einer Anionenaustauschmatrix umfasst, die Anionen umfasst, die eine unlösliche Ausfällung mit Kationen bilden, die an der Metalloberfläche aufgrund des Korrosionsvorgangs gebildet werden.

**2.** Korrosionsgehemmtes Metallprodukt nach Anspruch 1, wobei die Löslichkeitskonstanten der unlöslichen Ausfällungen in Wasser weniger als $10^{-30}$ betragen.

**3.** Metallprodukt nach Anspruch 1 oder Anspruch 2, wobei die Beschichtung, die auf der rückseitigen Oberfläche davon bereitgestellt wird, 5 bis 10 Gew./Gew.-% einer Kationenaustauschmatrix umfasst.

**4.** Metallprodukt nach einem der vorhergehenden Ansprüche, wobei die Beschichtung, die auf der rückseitigen Oberfläche bereitgestellt wird, 10 bis 15 Gew./Gew.-% einer Kationenaustauschmatrix umfasst.

**5.** Metallprodukt nach einem der vorhergehenden Ansprüche, wobei die Kationenbeladung der Ionenaustauschmatrix 60 bis 90 Gew./Gew.-% beträgt.

**6.** Metallprodukt nach einem der vorhergehenden Ansprüche, wobei die Kationenaustauschmatrix ein oder mehrere Kationen umfasst ausgewählt aus der Gruppe umfassend Calcium, Cer, Strontium, Lanthan, Yttrium, Aluminium und Magnesium.

**7.** Metallprodukt nach einem der vorhergehenden Ansprüche, wobei die Kationenaustauschmatrix ein natürlicher oder ein synthetischer Nanoton ist.

**8.** Metallprodukt nach Anspruch 7, wobei die Kationenaustauschmatrix ein Smectitton ist.

**9.** Metallprodukt nach Anspruch 7 oder Anspruch 8, wobei die Kationenaustauschmatrix ein synthetischer Ton ist.

**10.** Metallprodukt nach Anspruch 9, wobei der synthetische Ton Teilchen umfasst, die einen Durchmesser von 0,25 nm in exfolierter Form aufweisen.

**11.** Metallprodukt nach einem der vorhergehenden Ansprüche, wobei die Kationenaustauschmatrix eine Löslichkeitskonstante von weniger als $10^{-30}$ aufweist.

**12.** Metallprodukt nach einem der vorhergehenden Ansprüche, wobei die Beschichtung, die auf der oberen Oberfläche davon bereitgestellt wird, 5 bis 15 Gew./Gew.-% einer Anionenaustauschmatrix umfasst.

13. Metallprodukt nach einem der vorhergehenden Ansprüche, wobei die auf der oberen Oberfläche davon bereitgestellte Beschichtung eine Anionenbeladung von 10 bis 22 Gew./Gew.-% aufweist.

14. Metallprodukt nach einem der vorhergehenden Ansprüche, wobei die Anionenaustauschmatrix ein oder mehrere Anionen umfasst ausgewählt aus der Gruppe umfassend Pyrophosphat ($P_2O_7^{-2}$), Silicat ($SiO_4^{2-}$), Molybdat ($MoO_4^{2-}$) und Borat ($BO_4^{3-}$).

15. Metallprodukt nach einem der vorhergehenden Ansprüche, wobei die Anionenaustauschmatrix eine Löslichkeitskonstante in Wasser von weniger als $10^{-30}$ aufweist.

16. Metallprodukt nach einem der vorhergehenden Ansprüche, wobei die Anionenaustauschmatrix einen natürlichen oder synthetischen kationischen Nanoton umfasst.

17. Metallprodukt nach einem der vorhergehenden Ansprüche, wobei die Anionenaustauschmatrix einen Hydrotalcitton umfasst.

18. Verfahren zum Verhindern oder Hemmen der Korrosion eines Metallprodukts, umfassend die Schritte des Aufbringen auf die vorgereinigte obere Oberfläche davon einer Grundierung, die eine korrosionshemmende Menge einer Anionenaustauschmatrix umfasst, die Anionen umfasst, die eine unlösliche Ausfällung mit Kationen bilden, die auf der Metalloberfläche aufgrund des Korrosionsvorgangs gebildet werden, und des Aufbringens auf die vorgereinige rückwärtige Oberfläche davon einer Grundierung, die eine korrosionshemmende Menge einer Kationenaustauschmatrix umfasst, die Kationen umfasst, die eine unlösliche Ausfällung mit Hydroxylionen bilden, die aufgrund der Korrosionsreaktion gebildet werden.

19. Verfahren nach Anspruch 18, wobei die Grundierungen auf die oberen und rückwärtigen Oberflächen des Metallprodukts durch Bandlackierungs-, Lackier-, Spritz- und Laminiertechniken aufgebracht werden.

20. Korrosionshemmende Zusammensetzung für ein Metallprodukt, umfassend einen Träger und eine korrosionshemmende Menge einer Anionenaustauschmatrix, wie in einem der vorhergehenden Ansprüche definiert, die Anionen umfasst, die eine unlösliche Ausfällung mit Metallionen bilden, die durch den Korrosionsvorgang auf der Oberfläche des Metalls gebildet werden, um **dadurch** die Korrosion der darunterliegenden Metalloberfläche zu verhindern oder zu hemmen.

21. Korrosionsgehemmtes Metallprodukt umfassend ein Metallprodukt, auf dem eine Beschichtung bereitgestellt ist, die eine Anionenaustauschmatrix, wie in Anspruch 20 definiert, umfasst.

22. Verfahren zum Verhindern oder Hemmen der Korrosion eines Metallprodukts, umfassend das Aufbringen auf die vorgereinigte Oberfläche davon einer Zusammensetzung nach Anspruch 20.

23. Korrosionshemmende Zusammensetzung für ein Metallprodukt umfassend einen Träger und eine korrosionshemmende Menge einer Kationenaustauschmatrix, die Kationen umfasst, die eine unlösliche Ausfällung mit Hydroxylionen bilden, die durch den Korrosionsvorgang auf der Oberfläche des Metalls gebildet werden, um die Korrosion der darunterliegenden Metalloberfläche zu verhindern oder zu hemmen, wobei die Kationenaustauschmatrix einen oder mehrere synthetische Tone umfasst.

24. Zusammensetzung nach Anspruch 23, wobei die Katzionenaustauschmatrix 5 bis 15, bevorzugt 5 bis 10 Gew./Gew.-% der Zusammensetzung umfasst.

25. Zusammensetzung nach Anspruch 23 oder Anspruch 24, die Zink umfasst.

26. Verfahren zum Verhindern oder Hemmen der Korrosion eines Metallprodukts umfassend das Aufbringen auf die vorgereinigte Oberfläche davon einer Schicht einer Zusammensetzung nach einem der Ansprüche 23 bis 25.

27. Metallprodukt, auf dem eine Beschichtung nach einem der Ansprüche 23 bis 25 bereitgestellt wird.

**Revendications**

1.  Produit métallique inhibé contre la corrosion comprenant une bande d'acier possédant sur sa surface inférieure une couche de finition comprenant un support et une quantité inhibant la corrosion d'une matrice d'échange de cations comprenant des cations qui forment un précipité insoluble avec les ions hydroxy formés suite à la réaction de corrosion ; la bande possédant sur sa surface supérieure une couche de finition comprenant un support et une quantité inhibant la corrosion d'une matrice d'échange d'anions comprenant des anions qui forment un précipité insoluble avec les cations formés sur la surface du métal suite au procédé de corrosion.

2.  Produit métallique inhibé contre la corrosion selon la revendication 1, dans lequel les constantes de solubilité dans les précipités insolubles dans l'eau sont inférieures à $10^{-30}$.

3.  Produit métallique inhibé contre la corrosion selon la revendication 1 ou 2, dans lequel le revêtement placé sur sa surface inférieure comprend de 5 à 15 % m/m d'une matrice d'échange de cations.

4.  Produit métallique selon l'une quelconque des revendications précédentes, dans lequel le revêtement placé sur sa surface inférieure comprend de 10 à 15 % m/m d'une matrice d'échange de cations.

5.  Produit métallique selon l'une quelconque des revendications précédentes, dans lequel la charge cationique de la matrice d'échange d'ions est de 60 à 90 % m/m.

6.  Produit métallique selon l'une quelconque des revendications précédentes, dans lequel la matrice d'échange de cations comprend un ou plusieurs cations choisis dans le groupe comprenant le calcium, le cérium, le strontium, le lanthane, l'yttrium, l'aluminium et le magnésium.

7.  Produit métallique selon l'une quelconque des revendications précédentes, dans lequel la matrice d'échange de cations est une nano-argile naturelle ou synthétique.

8.  Produit métallique selon la revendication 7, dans lequel la matrice d'échange de cations est une argile smectite.

9.  Produit métallique selon la revendication 7 ou 8, dans lequel la matrice d'échange de cations est une argile synthétique.

10. Produit métallique selon la revendication 9, dans lequel l'argile synthétique comprend des particules ayant un diamètre de 0,25 nm sous forme exfoliée.

11. Produit métallique selon l'une quelconque des revendications précédentes, dans lequel la matrice d'échange de cations possède une constante de solubilité inférieure à $10^{-30}$.

12. Produit métallique selon l'une quelconque des revendications précédentes, dans lequel le revêtement placé sur sa surface supérieure comprend de 5 à 15 % m/m d'une matrice d'échange d'anions.

13. Produit métallique selon l'une quelconque des revendications précédentes, dans lequel le revêtement placé sur sa surface supérieure possède une charge anionique de 10 à 22 % m/m.

14. Produit métallique selon l'une quelconque des revendications précédentes, dans lequel la matrice d'échange d'anions comprend un ou plusieurs anions choisis dans le groupe comprenant le pyrophosphate ($P_2O_7^{2-}$) le silicate ($SiO_4^{2-}$) , le molybdate ($MoO_4^{2-}$) et le borate ($BO_4^{3-}$).

15. Produit métallique selon l'une quelconque des revendications précédentes, dans lequel la matrice d'échange d'anions possède une constante de solubilité dans l'eau inférieure à $10^{-30}$.

16. Produit métallique selon l'une quelconque des revendications précédentes, dans lequel la matrice d'échange d'anions comprend une nano-argile cationique naturelle ou synthétique.

17. Produit métallique selon l'une quelconque des revendications précédentes, dans lequel la matrice d'échange d'anions comprend une argile hydrotalcite.

**18.** Procédé de prévention ou d'inhibition de la corrosion d'un produit métallique comprenant les étapes consistant à appliquer sur sa surface supérieure pré-nettoyée une couche de finition comprenant une quantité inhibant la corrosion d'une matrice d'échange d'anions comprenant des anions qui forment un précipité insoluble avec les cations formés sur la surface du métal suite au procédé de corrosion, et appliquer sur sa surface inférieure pré-nettoyée une couche de finition comprenant une quantité inhibant la corrosion d'une matrice d'échange de cations comprenant des cations qui forment un précipité insoluble avec les ions hydroxy formés suite à la réaction de corrosion.

**19.** Procédé selon la revendication 18, dans lequel les couches de finition sont appliquées sur les surfaces supérieure et inférieure du produit métallique par des techniques d'enduction de bandes en continu, peinture, pulvérisation ou stratification.

**20.** Composition inhibant la corrosion pour un produit métallique comprenant un support et une quantité inhibant la corrosion d'une matrice d'échange d'anions telle que définie selon l'une quelconque des revendications précédentes, qui comprend des anions qui forment un précipité insoluble avec les ions métalliques formés sur la surface du métal à partir du procédé de corrosion pour empêcher ou inhiber la corrosion de la surface du métal sous-jacente.

**21.** Produit métallique inhibé contre la corrosion comprenant un produit métallique possédant sur celui-ci un revêtement comprenant une matrice d'échange d'anions selon la revendication 20.

**22.** Procédé de prévention ou d'inhibition de la corrosion d'un produit métallique comprenant l'application sur sa surface pré-nettoyée d'une composition selon la revendication 20.

**23.** Composition inhibant la corrosion pour un produit métallique comprenant un support et une quantité inhibant la corrosion d'une matrice d'échange de cations comprenant des cations qui forment un précipité insoluble avec les ions hydroxy formés sur la surface du métal à partir du procédé de corrosion pour empêcher ou inhiber la corrosion de la surface du métal sous-jacente, la matrice d'échange de cations comprenant une ou plusieurs argiles synthétiques.

**24.** Composition selon la revendication 23, dans laquelle la matrice d'échange de cations représente de 5 à 15 %, de préférence de 5 à 10 % m/m de la composition.

**25.** Composition selon la revendication 23 ou la revendication 24, comprenant du zinc.

**26.** Procédé de prévention ou d'inhibition de la corrosion d'un produit métallique comprenant l'application sur sa surface pré-nettoyée d'une couche d'une composition selon l'une quelconque des revendications 23 à 25.

**27.** Produit métallique possédant sur celui-ci un revêtement selon l'une quelconque des revendications 23 à 25.

Figure  -1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0208345 A1